# EUROPEAN PATENT APPLICATION

(11) **EP 2 757 814 A1**
(43) Date of publication of application: **23.07.2014**
(21) Application number: 11865348.4
(22) Date of filing: 01.11.2011
(51) Int. Cl.: H04W 4/12

(54) **METHOD AND SYSTEM FOR TRANSMITTING 3D PICTURE IN MULTIMEDIA MESSAGE**

(30) Priority: 14.09.2011 CN 201110271743
(71) Applicant: ZTE Corporation, Shenzhen, Guangdong 518057 (CN)
(72) Inventor: FANG, Wen, Shenzhen Guangdong 518057 (CN); LI, Yongqi, Shenzhen Guangdong 518057 (CN); LIN, Jun, Shenzhen Guangdong 518057 (CN)
(74) Representative: Ahner, Philippe
(86) International application number: PCT/CN2011/081654
(87) International publication number: WO 2012/151879

(57) **Abstract**

A method for transmitting a three-dimensional (3D) picture in an MMS message is disclosed. The method includes: in a Synchronized Multimedia Integration Language (SMIL) file, a sender assigns a same Identifier (ID) for two different pictures, sets an attribute of each of the two pictures as a 3D display picture, and sends the two pictures to a receiver; or, a sender synthesizes two different pictures in the SMIL file into a file, assigns an ID for the synthesized file, sets an attribute of the ID as a 3D display picture, and sends the synthesized file to a receiver; and the receiver displays the two pictures in a 3D mode. A system for transmitting a 3D picture in an MMS message is also disclosed. With the technical solution of the disclosure, the problem that transmission of a 3D picture cannot be supported in an existing protocol can be solved.

## Description

### TECHNICAL FIELD

The disclosure relates to the field of applications of mobile terminals, and particularly to a method and a system for transmitting a three-dimensional (3D) picture in a Multimedia Message Service (MMS) message.

### BACKGROUND

Glasses-free 3D is emerging display technology on the market at present. After many years of research, glasses-free 3D products have rapidly entered markets in different areas since 2010, including televisions, games, laptops, video players, mobile phones and the like.

The fundamental of 3D (also referred to as three dimensions) is that a sight is different to a certain extent in the left eye and the right eye of a person because of different locations of the eyes. In other words, when a nearby object is observed with the left eye closed and with the right eye closed separately, an obvious difference can be felt by the person. After being transmitted to the brain, different images seen by two eyes are processed by the brain and the person can feel distance differences of the object, namely, a visual stereoscopic impression is created. This is the fundamental of all existing 3D technologies, no matter in manner of glasses or in manner of glasses-free. In other words, two eyes are made to see two different images on the left and right to create a stereoscopic effect for a person.

There are roughly three glasses-free 3D technologies at present, i.e., "binocular parallax barrier 3D technology", "lenticular lenses 3D technology" and "directional backlight 3D technology". Although implemented by different specific methods, these three technologies have the same fundamental as described above.

Currently, there are already mobile phones that support glasses-free 3D display on the market. However, as communication tools, mobile phones have not been upgraded correspondingly in some application communication protocols related to videos and pictures at present. In other words, transmission protocols and modes corresponding to 3D pictures have not been formed in corresponding applications. For example, contents in transmission of MMS messages are generally pictures, audios, videos and texts, and transmission packaging may generally apply a Multipurpose Internet Mail Extensions (MIME) protocol and a Synchronized Multimedia Integration Language (SMIL) protocol. The MIME protocol specifies methods for organizing combination modes of various media files in transmission information while the SMIL protocol specifies layouts and expressions of various information elements. Since the glasses-free 3D is the emerging technology, original protocols fail to support transmission of 3D pictures in the field of MMS messages, so that two pictures which are transmitted through an MMS message and used for synthesizing a 3D picture may be displayed as two unrelated pictures by a receiver.

Generally, SMIL is divided into two parts: a head and a body. The head mainly enumerates the size of a page which includes elements, and the display length and width and the display position of each element while the body mainly contains the playing time of the page, indexing of the elements in the page, and the corresponding display position of each element in the head, as shown in the following example:
<smil xmlns="http://www.w3.org/2001/SMIL20/Language>
<head>
<meta name="author" content="ZTE Corporation" />
<layout>
<root-layout height="176" width="220" />
<region id="text" height="160" width="30" left="0" top="170" fit="hidden" />
<region id="image" height="160" width="170" left="0" top="0" fit="hidden" />
</layout>
</head>
<body>
<par dur="8000ms">
<text src="cid:text2" alt="Text2.txt" region="text" />
<img src="image1.gif" alt="cap.gif" region="image" />
<audio src="audio3.amr" begin="5000ms" end="10000ms" />
</pa r>
</body>
</smil>

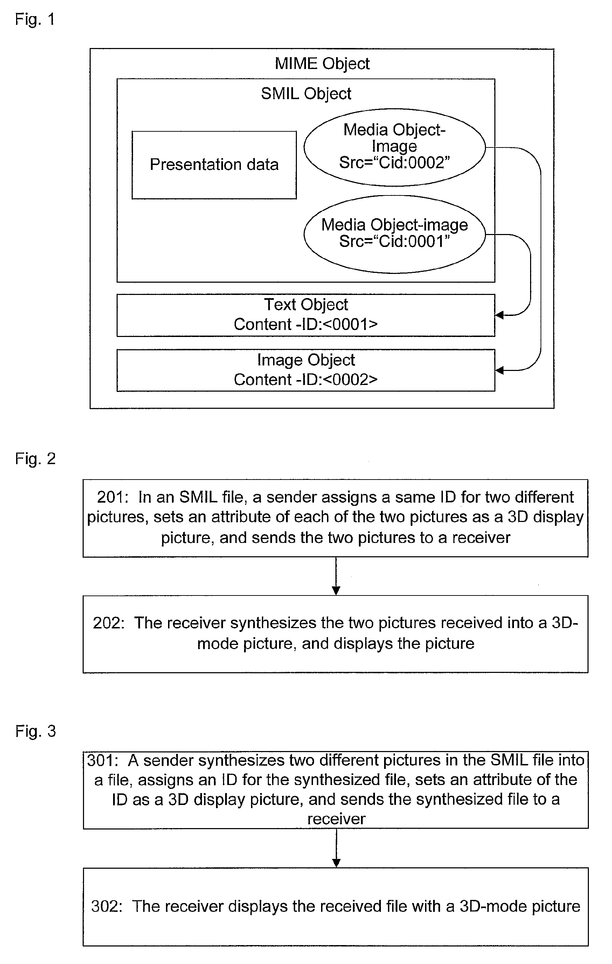

Fig. 1 shows a corresponding relationship of SMIL in normal conditions. The Identifier (ID) of a resource is labelled in SMIL, and the corresponding resource is determined through the ID and displayed according to description in SMIL.

### SUMMARY

In view of this, the disclosure is intended to provide a method and system for transmitting a 3D picture in an MMS message, so as to solve the problem that transmission of a 3D picture cannot be supported in an existing protocol.

To this end, a technical solution of the disclosure is implemented as follows.

A method for transmitting a 3D picture in an MMS message is provided, which includes:
a sender assigns a same Identifier (ID) for two different pictures in an SMIL file, sets an attribute of each of the two pictures as a 3D display picture, and sends the two pictures to a receiver; or, the sender synthesizes the two different pictures in the SMIL file into a file, assigns an ID for the synthesized file, sets an attribute of the ID as a 3D display picture, and sends the synthesized file to a receiver; and
the receiver displays the two pictures in a 3D mode.

In the method, the process that a sender assigns a same ID for two different pictures and sets an attribute of each of the two pictures as a 3D display picture may include:
the sender assigns a same image region ID for the two different pictures to be displayed in a 3D mode, sets, in a body of the SMIL file, image parameters of the two pictures, such that the image parameters of the picture to be sent later follow those of the picture to be sent first, and adds to the body of the SMIL file, attributes for indicating the two pictures as 3D display pictures and for indicating an order in which the two pictures are to be played.

In the method, the process that the two pictures are sent to the receiver may include:
the sender packages the two pictures together with the SMIL file, encapsulates the two pictures and the SMIL file under an MIME protocol, and sends the encapsulated pictures and SMIL file to the receiver.

In the method, the process that the receiver displays the two pictures in a 3D mode may include:
after downloading an MMS message, the receiver parses the SMIL file, and determines, according to the two different pictures having the same image region ID, that the two pictures are to be displayed in a same image region of a page simultaneously, uses the image parameters of the first received picture as a display mode of the two pictures, when playing the MMS message, calls a display processing program to synthesize the two pictures into a 3D-mode picture for display.

In the method, the process that the sender synthesizes the two different pictures in the SMIL file into the file, assigns an ID for the synthesized file, sets the attribute of the ID as the 3D display picture and sends the synthesized file to the receiver may include:
the sender adds, into a head of the SMIL file, an ID attribute for indicating a file with an image region ID to be a 3D display picture, synthesizes the two pictures to be displayed in a 3D mode into a file, makes the file to correspond to the ID of the image region in the head, and sends the synthesized file and the processed SMIL file to the receiver.

In the method, the process that the receiver displays the two pictures in a 3D mode may include:
after receiving an MMS message, the receiver parses the SMIL file, and determines that there is, in the head of a page, a picture including the ID attribute for indicating a file with an image region ID to be a 3D display picture, and finds out the file corresponding to the ID of the image region, separates and extracts the two pictures in the file, and displays, in a 3D mode, the two extracted pictures.

The disclosure further provides a system for transmitting a 3D picture in an MMS message, which includes a sender and a receiver, wherein
the sender is configured to: assign a same ID for two different pictures in an SMIL file, set an attribute of each of the two pictures as a 3D display picture, and send the two pictures to the receiver; or, synthesize two different pictures in the SMIL file into a file, assign an ID for the synthesized file, set an attribute of the ID as a 3D display picture, and send the synthesized file to the receiver; and
the receiver is configured to display a picture in a 3D mode.

According to the method and system for transmitting a 3D picture in an MMS message provided by the disclosure, a sender assigns a same ID for two different pictures in an SMIL file, sets an attribute of each of the two pictures as a 3D display picture, and sends the two pictures to a receiver; or, a sender synthesizes two different pictures in the SMIL file into a file, assigns an ID for the synthesized file, sets an attribute of the ID as a 3D display picture, and sends the synthesized file to a receiver; and the receiver displays a picture in a 3D mode. An SMIL file in an MMS message transmission protocol is improved to support transmission and display of a 3D picture, so that the problem that two pictures cannot be set as a set of 3D picture in the existing MMS message transmission protocol can be solved, thus solving the problem that transmission of a 3D picture cannot be supported in the existing protocol and implementing transmission of a 3D picture with an MMS message.

### BRIEF DESCRIPTION OF THE DRAWINGS

Fig. 1 is a diagram illustrating corresponding relations of SMIL in the related art;
Fig. 2 is a flowchart of a first method for transmitting a 3D picture in an MMS message according to the disclosure;
Fig. 3 is a flowchart of a second method for transmitting a 3D picture in an MMS message according to the disclosure;
Fig. 4 is a diagram illustrating SMIL in the first method for transmitting a 3D picture in an MMS message according to the disclosure;
Fig. 5 is a diagram illustrating a 3D picture file in the second method for transmitting a 3D picture in an MMS message according to the disclosure; and
Fig. 6 is a structural diagram of a system for transmitting a 3D picture in an MMS message according to the disclosure.

### DETAILED DESCRIPTION

The basic idea of the disclosure is that: in an SMIL file, a sender assigns a same ID for two different pictures, sets an attribute of each of the two pictures as a 3D display picture, and sends the two pictures to a receiver; or, a sender synthesizes two different pictures in the SMIL file into a file, assigns an ID for the synthesized file, sets an attribute of the ID as a 3D display picture, and sends the synthesized file to a receiver; and the receiver displays the two pictures in a 3D mode.

The disclosure will be further elaborated below with reference to the drawings and specific embodiments.

The disclosure provides a method for transmitting a 3D picture in an MMS message. Fig. 2 is a flowchart of a first method for transmitting a 3D picture in an MMS message according to the disclosure. As shown in Fig. 2, the method includes the following steps:
Step 201: In an SMIL file, a sender assigns a same ID for two different pictures, sets an attribute of each of the two pictures as a 3D display picture, and sends the two pictures to a receiver.

Specifically, the sender assigns image region IDs of the two different pictures to be displayed in a 3D mode in the SMIL file into the same ID, namely, an image attribute in a page is associated with two pictures simultaneously. The two pictures are packaged together with the SMIL file, then are encapsulated under an MIME protocol, and are sent to the receiver.

In order to avoid display confusion caused by difference in related control parameters of the two pictures including durations and the like, image parameters of the two pictures including the durations, and picture display zoom conditions and the like need to be set as same in the body of the SMIL file, namely, the image parameters are set as the same as that of the picture to be sent first. A new attribute further needs to be added to the body of the SMIL file, and the new attribute is used for indicating the two pictures as 3D display pictures and for indicating an order in which the two pictures are to be played. Optionally, other MMS message contents, such as videos, audios and texts, which need to be transmitted, are processed, arranged in the SMIL file according to a method in the prior art, and transmitted to the receiver.

In the disclosure, the sender may be a mobile phone, or other terminals supporting MMS messages, such as a pad.

Step 202: The receiver synthesizes the two pictures received into a 3D-mode picture, and displays the picture.

Specifically, after downloading an MMS message, the receiver parses the SMIL file, and determines, according to the two different pictures having the same image region ID, that the two pictures are to be displayed in a same image region of a page simultaneously, and uses the image parameters of the first received picture as a display mode of the two pictures; and when playing the MMS message, the receiver calls a display processing program to synthesize the two pictures into a 3D-mode picture for display. Thus, a user can receive and see a 3D image formed by the two pictures.

Fig. 3 is a flowchart of a second method for transmitting a 3D picture in an MMS message according to the disclosure. As shown in Fig. 3, the method includes the following steps:
Step 301: A sender synthesizes two different pictures in the SMIL file into a file, assigns an ID for the synthesized file, sets an attribute of the ID as a 3D display picture, and sends the file to a receiver.

Specifically, the sender adds, into the head of the SMIL file, an ID attribute for indicating a file with an image region ID corresponding to the ID attribute to be a 3D display picture; and packages and synthesizes two pictures to be displayed in a 3D mode into a file, makes the file to correspond to the ID of the image region in the head, and sends the synthesized file and the processed SMIL file to the receiver. Optionally, other MMS message contents, such as videos, audios and texts, which need to be transmitted, are processed, arranged in the SMIL file according to a method in the prior art, and transmitted to the receiver.

Step 302: The receiver displays the received file with a 3D-mode picture.

Specifically, after receiving an MMS message, the receiver parses the SMIL file, and determines that there is, in the head of a page, a picture including the ID attribute for indicating a file with an image region ID to be a 3D display picture, and finds out the file corresponding to the ID of the image region, separates and extracts the two pictures in the file, and displays, in a 3D mode, the two extracted pictures. Thus, the user can receive and see a 3D image formed by the two pictures.

### Embodiment 1

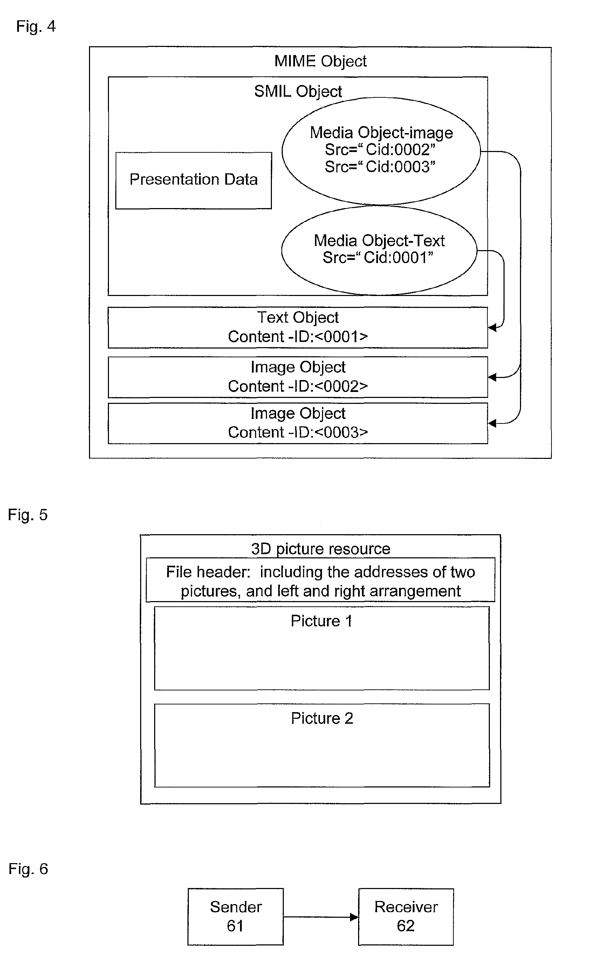

Fig. 4 is a structural diagram of SMIL for transmitting the two pictures in the first method according to the disclosure. Compared with Fig. 1, Fig. 4 has an obvious difference, namely, an image region ID corresponds to two pictures simultaneously. The two pictures are two pictures synthesized into a 3D-mode picture.

When the 3D-mode picture is displayed, in order to distinguish a left picture and a right picture of two pictures, a new attribute may be added to picture resource in the body in the present embodiment to indicate that the picture resource is a left picture or a right picture in the 3D-mode picture. A name and a value of the attribute are applicable as long as protocols of the sender and the receiver are consistent. An example in the present embodiment is described as follows:
<body>
<par dur="8000ms">
<text src="cid:text2" alt="Text2.txt" region="text" />
<img src="image1.gif" region="image" 3D="left"/>
<img src="image2.gif" region="image" 3D="right" />
<audio src="audio3.amr" begin="5000ms" end="10000ms" />
</pa r>
</body>

In the present embodiment, a 3D picture is implemented mainly by making the same image region ID in the head to correspond to two pictures and adding a 3D control attribute. The method of the disclosure may be also implemented by setting a certain ID in the head, for example:
<head>
<meta name="author" content="ZTE Corporation" />
<layout>
<root-layout height="176" width="220" />
<region id="text" height="160" width="30" left="0" top="170" fit="hidden" />
<region id="3D" height="160" width="170" left="0" top="0" fit="hidden" />
</layout>
</head>

An ID attribute indicating a 3D display picture is added. An ID having the attribute should correspond to two pictures simultaneously, and the two pictures should be a left picture and a right picture during 3D display separately.

Alternatively, a 3D attribute may be defined as a subsidiary attribute of an image region ID attribute and is used for indicating that the image region ID should display a picture in a 3D mode. For example:
<head>
<meta name="author" content="ZTE Corporation" />
<layout>
<root-layout height="176" width="220" />
<region id="text" height="160" width="30" left="0" top="170" fit="hidden" />
<region id="image" height="160" width="170" left="0" top="0" fit="hidden" 3D="TURE"/>
</layout>
</head>

In the two methods, since it's been indicated in the head that the ID attribute is a 3D display picture, whether it is indicated in the body that the ID attribute is a 3D display picture is unnecessary. A left picture ID and a right picture ID of the two pictures may apply a indicating method similar to left and right in Fig. 4, or may be without IDs by default. The first picture described in the body is taken as the left picture and the second picture is taken as the right picture.

### Embodiment 2

The key point of the second method of the disclosure is that: two pictures are directly synthesized into a file and then sent, and the file is set as a 3D display picture in the head to indicate a receiver to display, in a 3D mode, the file.

A manner for setting a file as a 3D display picture in the head can refer to Embodiment 1, which is not repeated here.

There are many methods for integrating and packaging two pictures into a file, which are not illustrated one by one here. Only one of them will be illustrated here in combination with the drawings.

As shown in Fig. 5, Picture 1 and Picture 2 is added with a unified file header and packaged into a 3D picture file, and the file header may include the following contents:
1. the head addresses of Picture 1 and Picture 2, used for finding picture data of Picture 1 and Picture 2 and extracting the two pictures therein; and
2. left and right arrangement of Picture 1 and Picture 2, for example, Picture 1 being on the left while Picture 2 being on the right (or an agreed default manner being applied).

To implement the method, the disclosure further provides a system for transmitting a 3D picture in an MMS message. Fig. 6 is a structural diagram of a system for transmitting a 3D picture in an MMS message according to the disclosure. As shown in Fig. 6, the system includes a sender 61 and a receiver 62.

The sender 61 is configured to: set a same ID for two different pictures in an SMIL file" set an attribute of each of the two pictures as a 3D display picture, and send the two pictures to the receiver; or, synthesize two different pictures in the SMIL file into a file, assign an ID for the synthesized file, set an attribute of the ID as a 3D display picture, and send the synthesized file to the receiver 62.

The receiver 62 is configured to display a picture in a 3D mode.
the process that the sender 61 assigns the same ID for two different pictures, and sets an attribute of each of the two pictures as a 3D display picture includes: the sender assigns a same image region ID for the two different pictures to be displayed in a 3D mode, sets, in a body of the SMIL file, image parameters of the two pictures, such that the image parameters of the picture to be sent later follow those of the picture to be sent first, and adds to the body of the SMIL file, attributes for indicating the two pictures as 3D display pictures and for indicating an order in which the two pictures are to be played.

The process that the sender 61 sends the two pictures to the receiver includes: the sender packages the two pictures together with the SMIL file, encapsulates the two pictures and the SMIL file under an MIME protocol, and sends the encapsulated pictures and SMIL file to the receiver.

The process that the receiver 62 displays the two pictures in a 3D mode includes: after downloading an MMS message, the receiver parses the SMIL file, and determines, according to the two different pictures having the same image region ID, that the two pictures are to be displayed in a same image region of a page simultaneously, uses the image parameters of the first received picture as a display mode of the two pictures, when playing the MMS message, calls a display processing program to synthesize the two pictures into a 3D-mode picture for display.

The process that the sender 61 synthesizes the two different pictures in the SMIL file into the file, assigns an ID for the synthesized file, sets the attribute of the ID as the 3D display picture and sends the synthesized file to the receiver includes: the sender adds, into a head of the SMIL file, an ID attribute for indicating a file with an image region ID to be a 3D display picture; synthesizes two pictures to be displayed in a 3D mode into a file, makes the file to correspond to the ID of the image region in the head, and sends the synthesized file and the processed SMIL file to the receiver.

The process that the receiver 62 displays the two pictures in a 3D mode includes: after receiving an MMS message, the receiver parses the SMIL file, and determines that there is, in the head of a page, a picture including the ID attribute for indicating a file with an image region ID to be a 3D display picture, and finds out the file corresponding to the ID of the image region, separates and extracts the two pictures in the file, and displays, in a 3D mode, the two extracted pictures.

The above are only preferred embodiments of the disclosure, and are not be intended to limit the scope of protection of the claims of the disclosure. Any modifications, equivalent replacements, improvements and the like made within the spirit and principle of the disclosure shall fall within the scope of protection of the claims of the disclosure.

## Claims

1. A method for transmitting a three-dimensional (3D) picture in a Multimedia Message Service (MMS) message, comprising:
assigning, by a sender, a same Identifier (ID) for two different pictures in a Synchronized Multimedia Integration Language (SMIL) file, setting an attribute of each of the two pictures as a 3D display picture, and sending the two pictures to a receiver; or, synthesizing, by the sender, the two different pictures in the SMIL file into a file, assigning an ID for the synthesized file, setting an attribute of the ID as a 3D display picture, and sending the synthesized file to a receiver; and
displaying, by the receiver, the two pictures in a 3D mode.

2. The method according to claim 1, wherein the step of assigning, by the sender, a same ID for two different pictures, and setting an attribute of each of the two pictures as a 3D display picture comprises:
assigning, by the sender, a same image region ID for the two different pictures to be displayed in a 3D mode;
setting, in a body of the SMIL file, image parameters of the two pictures, such that the image parameters of the picture to be sent later follow those of the picture to be sent first; and
adding to the body of the SMIL file, attributes for indicating the two pictures as 3D display pictures and for indicating an order in which the two pictures are to be played.

3. The method according to claim 1, wherein the step of sending the two pictures to the receiver comprises:
packaging, by the sender, the two pictures together with the SMIL file, encapsulating the two pictures and the SMIL file under a Multipurpose Internet Mail Extensions (MIME) protocol, and sending the encapsulated pictures and SMIL file to the receiver.

4. The method according to claim 2 or 3, wherein the step of displaying, by the receiver, the two pictures in a 3D mode comprises:
after downloading an MMS message, parsing, by the receiver, the SMIL file, and determining, according to the two different pictures having the same image region ID, that the two pictures are to be displayed in a same image region of a page simultaneously, using the image parameters of the first received picture as a display mode of the two pictures, when displaying the MMS message, calling a display processing program to synthesize the two pictures into a 3D-mode picture for display.

5. The method according to claim 1, wherein the step of synthesizing, by the sender, the two different pictures in the SMIL file into a file, assigning an ID for the synthesized file, setting an attribute of the ID as a 3D display picture, and sending the synthesized file to a receiver comprises:
adding into a head of the SMIL file, by the sender, an ID attribute for indicating a file with an image region ID to be a 3D display picture; and synthesizing the two pictures to be displayed in a 3D mode into a file, making the file to correspond to the ID of the image region in the head, and sending the synthesized file and the processed SMIL file to the receiver.

6. The method according to claim 5, wherein the step of displaying, by the receiver, the two pictures in a 3D form comprises:
after receiving an MMS message, parsing, by the receiver, the SMIL file, determining that there is, in the head of a page, a picture including the ID attribute for indicating a file with an image region ID to be a 3D display picture, finding out the file corresponding to the ID of the image region, separating and extracting the two pictures in the file, and displaying, in a 3D mode, the two extracted pictures.

7. A system for transmitting a three-dimensional (3D) picture in a Multimedia Message Service (MMS) message, comprising a sender and a receiver, wherein
the sender is configured to: assign a same Identifier (ID) for two different pictures in a Synchronized Multimedia Integration Language (SMIL) file, set an attribute of each of the two pictures as a 3D display picture, and send the two pictures to the receiver; or, synthesize two different pictures in the SMIL file into a file, assign an ID for the synthesized file, set an attribute of the ID as a 3D display picture, and send the synthesized file to the receiver; and
the receiver is configured to display the two pictures in a 3D mode.
